(19) Europäisches Patentamt
European Patent Office
Office européen des brevets

(11)  **EP 1 817 352 B1**

(12) **EUROPÄISCHE PATENTSCHRIFT**

(45) Veröffentlichungstag und Bekanntmachung des Hinweises auf die Patenterteilung:
**04.08.2010  Patentblatt 2010/31**

(21) Anmeldenummer: **05805896.7**

(22) Anmeldetag: **04.11.2005**

(51) Int Cl.:
*C08F 220/00* *(2006.01)*      *A62D 1/00* *(2006.01)*

(86) Internationale Anmeldenummer:
**PCT/EP2005/011822**

(87) Internationale Veröffentlichungsnummer:
**WO 2006/050859 (18.05.2006 Gazette 2006/20)**

(54) **WASSERABSORBIERENDE POLYMERE ZUR HERSTELLUNG BRANDHEMMENDER ZUSAMMENSETZUNGEN**

WATER-ABSORBENT POLYMERS FOR PRODUCING FLAME-RETARDANT COMPOSITIONS

POLYMERES HYDROABSORBANTS POUR PRODUIRE DES COMPOSITIONS IGNIFUGEANTES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.11.2004  DE 102004054396**

(43) Veröffentlichungstag der Anmeldung:
**15.08.2007  Patentblatt 2007/33**

(73) Patentinhaber: **BASF SE**
**67056 Ludwigshafen (DE)**

(72) Erfinder:
• **BECK, Martin**
  **67133 Maxdorf (DE)**
• **CHAMP, Samantha**
  **67063 Ludwigshafen (DE)**
• **TÖNNESSEN, Markus**
  **67069 Ludwigshafen (DE)**
• **ZIEMER, Antje**
  **68199 Mannheim (DE)**
• **LÖSCH, Dennis**
  **67122 Altrip (DE)**

(56) Entgegenhaltungen:
**WO-A-2005/014115     US-A- 3 354 084**

**Beschreibung**

Die vorliegende Erfindung betrifft wasserabsorbierende Polymere, Verfahren zur Herstellung der wasserabsorbierenden Polymere sowie die Herstellung brandhemmender Zusammensetzungen und Beschichtungen.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erindung zu verlassen.

Ein Problem bei der Brandbekämpfung ist, dass das zum Löschen verwendete Wasser abfließen und damit nur teilweise zum Kühlen des Brandherdes genutzt werden kann. Daher muss sehr viel Wasser eingesetzt werden, mit der Folge, dass der Wasserschaden oft größer als der reine Brandschaden ist.

Zur Lösung diese Problems wird seit über 35 Jahren die Verwendung von Hydrogelen vorgeschlagen, beispielsweise in EP-A 649 669, US 3,229,769 und US 5,849,210. Die Hydrogele werden aus einem wasserabsorbierenden Polymer und Wasser hergestellt. Das Hydrogel bindet das Wasser und verhindert damit das Fortfließen des Wassers von Brandherd.

EP-A 649 669 beschreibt die Verwendung wasserabsorbierender Polymere auf Basis von Natriumacrylat als Trockenlöschmittel und als Löschmittelzusatz in Wasser.

In US 3,229,769 werden Hydrogele auf Basis ionisch vernetzter Polykaliumacrylate als brandhemmende Beschichtungen offenbart.

US 5,849,210 offenbart die Verwendung von Hydrogelen zur Brandbekämpfung, wobei zur Herstellung der Hydrogele wasserabsorbierende Polymere auf Basis von Natriumacrylat mit einem Neutralisationsgrad um 75 mol% eingesetzt werden.

Aufgabe der vorliegenden Erfindung war die Bereitstellung verbesserter wasserabsorbierender Polymere.

Eine weitere Aufgabe war die Bereitstellung brandhemmender Zusammensetzungen mit erhöhter Lagerstabilität bei höheren Temperaturen.

Eine weitere Aufgabe war die Bereitstellung brandhemmender Zusammensetzungen, basierend auf wasserabsorbierenden Polymeren mit hoher Quellfähigkeit, die sich kostengünstig herstellen lassen.

Eine weitere Aufgabe ist die Bereitstellung brandhemmender Zusammensetzungen auf Basis von Hydrogelen mit verbesserter brandhemmender Wirkung im trockenen Zustand.

Gelöst wurde die Aufgabe durch wasserabsorbierende Polymere, enthaltend

       a) mindestens ein einpolymerisiertes ethylenisch ungesättigtes, säuregruppentragendes Monomer,

       b) mindestens einen einpolymerisierten Vernetzer,

       c) gegebenenfalls ein oder mehrere einpolymerisierte mit den unter a) genannten Monomeren copolymerisierbare ethylenisch und/oder allylisch ungesättigte Monomere,

       d) gegebenenfalls ein oder mehrere wasserlösliche Polymere, auf die die unter a), b) und ggf. c) genannten Monomere zumindest teilweise aufgepfropft sind, und

       e) gegebenenfalls ein oder mehrere umgesetzte Nachvernetzer,

wobei die Säuregruppen des mindestens einen Momomeren a) zu 51 bis 64 mol-% als Carboxylatgruppen vorliegen und die Carboxylatgruppen zumindest teilweise Kaliumionen als Gegenionen aufweisen

Vorzugsweise liegen 54 bis 63 mol-%, besonders bevorzugt 57 bis 62 mol-%, ganz besonders bevorzugt 59 bis 61 mol-%, der Säuregruppen des einpolymerisierten Monomeren a) als Carboxylatgruppen vor.

Die Carboxylatgruppen des einpolymerisierten Monomeren a) weisen vorzugsweise zu mindestens 15 mol-%, bevorzugt zu mindestens 33 mol-%, besonders bevorzugt zu mindestens 80 mol%, ganz besonders bevorzugt zu mindestens 95 mol-%, Kaliumionen als Gegenion auf.

Geeignete Monomere für die einpolymerisierten Monomere a), b) und c) sind die unten beschriebenen Monomere i), ii) und iii).

Geeignete wasserlösliche Polymere für die zumindest teilweise gepfroften wasserlöslichen Polymere d) sind die unten beschriebenen wasserlöslichen Polymere iv).

Geeignete umgesetzte Nachvernetzer e) sind die unten beschriebenen Nachvernetzer.

Die wasserabsorbierenden Polymere weisen typischerweise eine Zentrifugenretentionskapazität von mindestens 15 g/g, vorzugsweise mindestens 20 g/g, besonders bevorzugt mindestens 25 g/g, auf. Die Zentrifugenretentionskapazität wird gemäß der von der EDANA (European Disposables and Nonwovens Association) empfohlenen Testmethode Nr. 441.2-02 "Centrifuge retention capacity" bestimmt.

Vorzugsweise sind die erfindungsgemäßen wasserabsorbierenden Polymere schwach oberflächennachvernetzt.

Ein weiterer Gegenstand der vorliegenden Erfindung ist ein Verfahren zur Herstellung wasserabsorbierender Polymere durch Polymerisation einer Monomerlösung, enthälfend

       i. mindestens ein ethylenisch ungesättigtes, säuregruppentragendes Monomer,

       ii. mindestens einen Vernetzer,

       iii. gegebenenfalls ein oder mehrere mit i) copolymerisierbare ethylenisch und/oder allylisch ungesättigte Monomere und

iv. gegebenenfalls ein oder mehrere wasserlösliche Polymere, auf die die Monomere i), ii) und ggf. iii) zumindest teilweise aufgepfropft werden können,

dadurch gekennzeichnet, dass die Säuregruppen des Monomeren i) in der Monomerlösung bis zu 40 mol% als Carboxylatgruppen vorliegen, das bei der Polymerisation erhaltene Hydrogel nachneutralisiert wird, so dass die Säuregruppen des einpolymerisierten Monomeren i) zu 51 bis 74 mol-% als Carboxylatgruppen vorliegen und die Carboxylatgruppen im nachneutralisierten Hydrogel zumindest teilweise Kaliumionen als Gegenionen aufweisen.

Die Herstellung wasserabsorbierender Polymere wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Zur Herstellung wasserabsorbierender Polymere können hydrophile ethylenisch ungesättigte, Monomere in Gegenwart von Vernetzern zu einem Grundpolymer umgesetzt werden. Die Polymerisation kann auch in Gegenwart einer geeigneten Pfropfgrundlage durchgeführt werden, wie in US-5 041,496 beschrieben. Die Reaktion kann beispielsweise als radikalische Lösungspolymerisation oder inverse Suspensionspolymerisation durchgeführt werden. Die radikalische Lösungspolymerisation ist bevorzugt.

Geeignete Monomere i) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die wasserabsorbierenden Polymere sind vernetzt, d.h. die Polymerisation wird in Gegenwart von Verbindungen mit mindestens zwei polymerisierbaren Gruppen, die in das Polymernetzwerk radikalisch einpolymerisiert werden können, durchgeführt. Vorzugsweise werden Vernetzer ii) verwendet, die mindestens eine polymerisierbare Gruppe, ausgewählt aus Allyl, Acryloxy und Methacryloxy, aufweisen, besonders bevorzugt ausschließlich. Allylgruppen, wie Allylether- und Allylamingruppen sind ganz besonders bevorzugt. Allylethergruppen sind ganz besonders bevorzugt. Die Vernetzer ii) können zwei, drei, vier oder mehr, vorzugsweise zwei, drei oder vier, besonders bevorzugt drei oder vier, polymerisierbare Gruppen enthalten. Die polymerisierbaren Gruppen im Vernetzer ii) können gleich oder verschieden sein, beispielsweise kann der Vernetzer ii) mindestens eine Acrylester-Gruppe und mindestens eine Allylether Gruppe, mindestens eine Acrylester-Gruppe und mindestens eine Allylamin-Gruppe, mindestens eine Methacrylester-Gruppe und mindestens eine Allylether-Gruppe, mindestens eine Methacrylester-Gruppe und mindestens eine Allylamin-Gruppe, mindestens zwei Acrylester-Gruppen oder mindestens zwei Methacrylester-Gruppen, vorzugsweise mindestens eine Allylether-Gruppe und mindestens eine Allylamin-Gruppe oder mindestens zwei Allylamin-Gruppen, besonders bevorzugt mindestens zwei Allylether-Gruppen, enthalten.

Geeignete Vernetzer ii) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 530 438 beschrieben, Di- und Triacrylate, wie in EP-A 547 847, EP-A 559 476, EP-A 632 068, WO 93/21237, WO 03/104299, WO 03/104300, WO 03/104301 und in der deutschen Patentanmeldung mit dem Aktenzeichen 10331450.4 beschrieben, gemischte Acrylate, die neben Acrylatgruppen weitere ethylenisch ungesättigte Gruppen enthalten, wie in den deutschen Patentanmeldungen mit den Aktenzeichen 10331456.3 und 10355401.7 beschrieben, oder Vernetzermischungen, wie beispielsweise in DE-A 195 43 368, DE-A 196 46 484, WO 90/15830 und WO 02/32962 beschrieben.

Bevorzugte Vernetzer ii) sind Ethylenglykoldiallylether, Diethylenglykoldiallylether, Polyethylenglykoldiallylether, Propylenglykoldiallylether, Dipropylenglykoldiallylether, Polypropylenglykoldiallylether, Tetraallyloxyethan, Trimethylolpropandiallylether, Trimethylolpropantriallylether, Pentaerithrittriallylether und Pentaerithrittetraallylether. Besonders bevorzugte Vernetzer ii) sind Tetraallyloxyethan, Trimethylolpropandiallylether, Trimethylolpropantriallylether, Pentaerithrittriallylether und Pentaerithrittetraallylether.

Mit den Monomeren i) copolymerisierbare ethylenisch ungesättigte Monomere iii) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere iv) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Herstellung eines geeigneten Grundpolymers sowie weitere geeignete hydrophile ethylenisch ungesättigte Monomere i) werden in DE-A 199 41 423, EP-A 686 650, WO 01/45758 und WO 03/104300 beschrieben.

Die Umsetzung wird vorzugsweise in einem Kneter, wie beispielsweise in WO 01/38402 beschrieben, oder auf einem Bandreaktor, wie beispielsweise in EP-A 955 086 beschrieben, durchgeführt.

Die Säuregruppen der erhaltenen Hydrogele sind zu 51 bis 74 mol-%, vorzugsweise zu 56 bis 69 mol-%, besonders bevorzugt zu 59 bis 64 mol-%, neutralisiert, wobei die üblichen Neutralisationsmittel verwendet werden können, beispielsweise Ammoniak, Amine, wie Etanolamin, Diethanolamin, Triethanolamin oder Dimethylaminoethanolamin, vorzugsweise Alkalimetallhydroxide, Alkalimetalloxide, Alkalimetallcarbonate oder Alkalimetallhydrogencarbonate sowie deren Mischungen, wobei Natrium und Kalium als Alkalimetalle besonders bevorzugt sind, ganz besonders bevorzugt jedoch Kaliumhydroxid, Kaliumcarbonat oder Kaliumhydrogencarbonat sowie deren Mischungen. Üblicherweise wird die Neutralisation durch Einmischung des Neutralisationsmittels als wässrige Lösung oder bevorzugt auch als Feststoff erreicht. Ein niedrigerer Neutralisationsgrad führt zu wasserabsorbierenden Polymeren mit verminderter Quellfähigkeit. Ein höherer Neutralisationsgrad erhöht den Verbrauch an Neutralisationsmittel ohne die Quellfähigkeit wesentlich zu erhöhen.

Zur Neutralisation der Säuregruppen können zumindest teilweise, vorzugsweise zu mindestens 15 mol-%, bevorzugt zu mindestens 33 mol-%, besonders bevorzugt zu mindestens 80 mol-%, ganz besonders bevorzugt zu mindestens 95 mol-%, Kaliumverbindungen eingesetzt. Ein hoher Kaliumionengehalt erhöht die Pflanzenverträglichkeit der wasserabsorbierenden Polymere.

Die Neutralisation kann nach der Polymerisation auf der Stufe des Hydrogels durchgeführt werden. Es ist aber auch möglich bis zu 40 mol-%, vorzugsweise 10 bis 30 mol%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das neutralisierte Hydrogel wird dann mit einem Band- oder Walzentrockner getrocknet bis der Restfeuchtegehalt vorzugsweise unter 10 Gew.-%, insbesondere unter 5 Gew.% liegt, wobei der Wassergehalt gemäß der von der EDANA (European Disposables and Nonwovens Association) empfohlenen Testmethode Nr. 430.2-02 "Moisture content" bestimmt wird. Das getrocknete Hydrogel wird hiernach gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 $\mu$m, besonders bevorzugt unter 900 $\mu$m, ganz besonders bevorzugt unter 800 $\mu$m, und vorzugsweise über 100 $\mu$m, besonders bevorzugt über 150 $\mu$m, ganz besonders bevorzugt über 200 $\mu$m.

Ganz besonders bevorzugt ist eine Partikelgröße (Siebschnitt) von 106 bis 850 $\mu$m. Die Partikelgröße wird gemäß der von der EDANA (European Disposables and Nonwovens Association) empfohlenen Testmethode Nr. 420.2-02 "Particle size distribution" bestimmt.

Die Grundpolymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysilylverbindungen, Polyaziridine, Polyamine, Polyamidoamine, Di- oder Polyglycidylverbindungen, wie in EP-A 083 022, EP-A 543 303 und EP-A 937 736 beschrieben, di- oder polyfunktionelle Alkohole, wie in DE-C 33 14 019, DE-C 35 23 617 und EP-A 450 922 beschrieben, oder $\beta$-Hydroxyalkylamide, wie in DE-A 102 04 938 und US 6,239,230 beschrieben.

Desweiteren sind in DE-A 40 20 780 zyclische Karbonate, in DE-A 198 07 502.2 Oxazolidon und dessen Derivate, wie 2-Hydroxyethyl-2-oxazolidon, in DE-A 198 07 992 Bis- und Poly-2-oxazolidinone, in DE-A 198 54 573.2 Oxotetrahydro-1,3-oxazin und dessen Derivate, in DE-A 198 54 574 N-Acyl-2-Oxazolidone, in DE-A 102 04 937 zyclische Harnstoffe, in der deutschen Patentanmeldung mit dem Aktenzeichen 10334584.1 bizyklische Amidacetale, in EP-A 1 199 327 Oxetane und zyklische Harnstoffe und in WO 03/031482 Morpholin-2,3-dion und dessen Derivate als geeignete Oberflächennachvernetzer beschrieben.

Die Nachvernetzung wird üblicherweise so durchgeführt, dass eine Lösung des Oberflächennachvernetzers auf das Hydrogel oder das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Vorzugsweise wird das Grundpolymer schwach nachvernetzt, d.h. die Nachvernetzerkonzentration beträgt typischerweise unter 0,3 Gew.%, vorzugsweise unter 0,2 Gew.-%, besonders bevorzugt unter 0,15 Gew.-% und ganz besonders bevorzugt unter 0,1 Gew.-% , jeweils bezogen auf das Grundpolymer. Um eine ausreichende Nachvernetzung zu erreichen werden vorzugsweise über 0,01 Gew.-%, besonders bevorzugt über 0,025 Gew.-%, ganz besonders bevorzugt über 0,05 Gew.-%, Nachvernetzer eingesetzt, jeweils bezogen auf das Grundpolymer.

Schwach nachvernetzte wasserabsorbierende Polymere weisen typischerweise eine Absorption unter einem Druck von 2070 Pa (0,3 psi) von höchstens 25 g/g, vorzugsweise höchstens 23 g/g, besonders bevorzugt höchstens 21 g/g, bzw. eine Absorption unter einem Druck von 4830 Pa von höchstens 18 g/g, vorzugsweise höchstens 15 g/g, besonders bevorzugt höchstens 12 g/g, auf. Die Absorption unter Druck wird gemäß der von der EDANA (European Disposables and Nonwovens Association) empfohlenen Testmethode Nr. 442.2-02 "Absorption under pressure" bestimmt.

Über die Nachvernetzung wird die Klebrigkeit des wasserabsorbierenden Polymeren eingestellt. Bei zu geringer Nachvernetzung kleben die Partikel im gequollenen Zustand zu stark aneinander und neigen zur Verbackung. Bei zu starker Nachvernetzung verlieren die gequollenen Partikel ihre Klebrigkeit völlig. Für den Einsatz bei der Brandbekämpfung ist aber eine Optimierte Klebrigkeit vorteilhaft, da die Partikel ohne weitere Hilfsstoffe auf dem zu schützenden brennbaren Material haften können.

Ein weiterer Gegenstand der vorliegenden Erfindung sind wasserabsorbierende Polymere, erhältlich nach den oben beschriebenen Verfahren.

Die erfindungsgemäßen wasserabsorbierenden Polymere eignen sich besonders zur Herstellung brandhemmender Zusammensetzungen oder Beschichtungen.

Aufgrund der über die Nachvernetzung einstellbaren Klebrigkeit eigenen sich nachvernetzte, vorzugsweise schwach nachvernetzte, wasserabsorbierende Polymere ebenfalls zur Herstellung brandhemmender Zusammensetzungen oder Beschichtungen. Vorzugsweise werden nachvernetzte wasserabsorbierende Polymere verwendet, deren Grundpolymere mit einem Vernetzer ii) hergestellt wurden.

Die wasserabsorbierenden Polymere eignen sich auch ausgezeichnet zur Verwendung als wasserrückhaltende Mittel in der Landwirtschaft, da die gequollenen Hydrogele eine verbesserte Lagerstabilität aufweisen. Vorteilhaft für diese Anwendung sind Partikelgrößenbereiche von 75 bis 1500 μm, vorzugsweise von 106 bis 850 μm, besonders bevorzugt von 150 bis 850 μm, und von 500 bis 10000 μm, vorzugsweise 1000 bis 4000 μm, besonders bevorzugt von 1500 bis 3000 μm.

Ein weiterer Gegenstand der vorliegenden Erfindung ist die Herstellung brandhemmender Zusammensetzungen durch Mischen mindestens eines wasserabsorbierenden Polymers mit Wasser. Das Gewichtsverhältnis von Wasser zu wasserabsorbierendem Polymer beträgt vorzugsweise mindestens 50:1, besonders bevorzugt mindestens 70:1, ganz besonders bevorzugt mindestens 80:1, und bis zu 1000:1, vorzugsweise bis 500:1, ganz besonders bevorzugt bis 100:1.

Ein weiterer Gegenstand der vorliegenden Erfindung sind brandhemmende Zuammensetzungen, enthaltend mindestens ein wasserabsorbierendes Polymer und Wasser, vorzugsweise mit den oben genannten Gewichtsverhältnissen.

Vorteilhaft ist auch der Zusatz von Farbstoffen oder von Deckhilfsmitteln. Die Deckhilfsmittel trüben die brandhemmende Zusammensetzung und verhindern eine Wechselwirkung der Farbe des verwendeten zugesetzten Farbstoffs mit der Untergrundfarbe. Dadurch ist es beispielsweise möglich bei der Bekämpfung von Waldbränden bereits mit Löschmittel belegt Gebiete leicht zu erkennen. Vorzugsweise enthalten die brandhemmenden Zusammensetzungen mindestens einen Farbstoff und mindestens ein Deckhilfsmittel.

Die Konzentration des Farbstoffs in der brandhemmenden Zusammensetzung beträgt vorzugsweise 0,005 bis 10 Gew.%, besonders bevorzugt 0,01 bis 5 Gew.-%, ganz besonders bevorzugt 0,015 bis 2 Gew.-%.

Besonders vorteilhaft sind Farbstoffe, die beim Trocknen der brandhemmenden Zusammensetzung verblassen und sich mit der Zeit zersetzen oder sich anderweitig leicht entfernen lassen, beispielsweise durch Spülen mit Wasser.

Geeignete Deckhilfsmittel sind anorganische Verbindungen mit einer Wasserlöslichkeit von bis zu 0,005 g/100ml Wasser bei 25°C, wie Glimmer, Kreide, Kalziumkarbonat, Titandioxid.

Geeignete Deckhilfsmittel sind aber auch in der brandhemmenden Zusammensetzung dispergierbare Polymere oder Copolymere, beispielsweise Styrol/Butadien-Copolymere, Styrol/Vinylpyrolidon-Copolymere, Styrol/Butadien/Acrylnitril-Copolymere, Polyacrylsäure, Polyvinylacetat, Polyvinylacrylat, Stärke, Polystyrol, Polyethylenimin, Polyethylen oder Polyvinylalkohol.

Selbstverständlich können auch Gemische verschiedener Deckhilfsmittel eingesetzt werden.

Die Konzentration des Deckhilfsmittels in der brandhemmenden Zusammensetzung beträgt vorzugsweise 0,005 bis 10 Gew.%, besonders bevorzugt 0,01 bis 5 Gew.-%, ganz besonders bevorzugt 0,015 bis 2 Gew.-%.

Die brandhemmende Zusammensetzung kann neben Wasser noch bis zu 10 Gew.-%, vorzugsweise 0,01 bis 10 Gew.-%, organische Lösungsmittel enthalten. Die organischen Lösungsmittel können beispielsweise die Quellung der wasserabsorbierenden Polymeren bei der Herstellung der brandhemmenden Zusammensetzung beschleunigen. Geeignete Lösungsmittel sind Alkohole, Diole, Polyole oder Glykolether. Es können auch Gemische aus zwei oder mehr Lösungsmitteln verwendet werden.

Die brandhemmenden Zusammensetzungen können gegebenenfalls weitere Zusatzstoffe enthalten, beispielsweise Viskositätsregulatoren, Dispergierhilfsmittel, pH-Regulatoren und Tenside. Die Einsatzmenge der Zusatzstoffe kann bis zu 10 Gew.-%, vorzugsweise 0,01 bis 5 Gew.-%, pro Zusatzstoff und bis zu 30 Gew.-% für die Summe der Zusatzstoffe betragen, bezogen auf die brandhemmende Zusammensetzung.

Die Viskositätsregulatoren erhöhen die Stabilität der brandhemmenden Zusammensetzung und verbessern deren anwendungstechnische Eigenschaften. Als Viskositätsregulatoren sind Verdicker geeignet, wie Bindemittel, alkaliquellbare Verdicker, alkalilösliche Verdicker und polymere Verdicker. Beispiele für Verdicker sind Polyvinylalkohol, wasserlösliche oder wasserdispergierbare Zellulosederivate, wie Hydroxyethylzellulose, Hydroxypropylzellulose und Natriumcarboxymethylzellulose, Polyether, urethanmodifizierte Polyether, Polycarbonsäuren, Polyvinylpyrrolidon, Polyalkoxylenderivate, wie Polyethylenglykolether und Polyethylenglykoldistearat, sowie Natriumalginate. Es können auch Gemische aus zwei oder mehr Viskositätsregulatoren verwendet werden.

Die Dispergierhilfsmittel können ebenfalls Stabilität und Eigenschaften der erfindungsgemäßen Zusammensetzung verbessern. Geeignete Dispergierhilfsmittel sind beispielsweise Natriumpolycarboxylate, Natrium- oder Ammoniumnaphthalinsulfonate, polyalkoxilierte Phenole, Fettsäureester oder Natriumpolyphosphate. Es können auch Gemische aus zwei oder mehr Dispergierhilfsmitteln verwendet werden.

Mit den pH-Regulatoren kann der pH-Wert der brandhemmenden Zusammensetzung eingestellt werden, vorzugsweise auf eine Wert von 6 bis 8, wodurch die Korrosivität er Zusammensetzung vermindert wird. Geeignete pH-Regulatoren sind beispielsweise Natriumhydroxid, Kaliumhydroxid, Natriumkarbonat, Kaliumkarbonat, Natriumhydrogenkarbonat, Ammoniumhydroxid, Ammoniak, Amine, wie Triethanolamin oder 2-Dimethylaminoethanol. Es können auch Gemische aus zwei oder mehr pH-Regulatoren verwendet werden.

Tenside können ebenfalls die anwendungstechnischen Eigenschaften verbessern. Eingesetzt werden können anionische, kationische und nichtionische Tenside.

Zusätzlich können die brandhemmenden Zusammensetzungen noch Biozide enthalten. Die Biozide erhöhen die Lagerstabilität, insbesondere der wässrigen Zubereitungen.

Weiterhin ist der Zusatz oberflächenvergrößernder Stoffe, wie Fasern oder pyrogene Kieselsäure, möglich.

Die Zusammensetzungen eignen sich als Löschmittel zur Feuerbekämpfung. Beispielsweise kann eine wässrige Zubereitung angesetzt und für eine Feuerlöscheinsatz bereitgehalten werden. Es ist aber auch möglich die wässrige Zubereitung erst während eines Feuerlöscheinsatzes durch Verdünnen mit Wasser herzustellen.

Ein weiterer Gegenstand der vorliegenden Erfindung sind Kleidungsstücke oder Gebäudeteile mit einer brandhemmenden Beschichtung enthaltend ein wasserabsorbierendes Polymer. In diesem Fall können die beschichteten Kleidungsstücke erst unmittelbar vor ihrem Einsatz befeuchtet werden. Die so behandelten Kleidungsstücke sind aufgrund der hohen Menge gebundenen Wassers nur schwer entflammbar. Beschichtete Gebäudeteile können auch erst während eines Löscheinsatzes mit Wasser benetzt werden. Dadurch wird bewirkt, dass das Löschwasser nicht fortläuft sondern an den gefährdeten Bereichen gebunden wird.

Testmethoden

Zentrifugenretentionskapazität (Centrifuge retention capacity, CRC)

Die Bestimmung der Zentrifugenretentionskapazität wurde analog zur von der EDANA (European Disposables and Nonwovens Association) empfohlenen Testmethode Nr. 441.2-02 "Centrifuge retention capacity" durchgeführt.

Zur Bestimmung der Zentrifugenretentionskapazität wurden 0,2000 ± 0,0050 g getrocknetes wasserabsorbierendes Polymer (Kornfraktion 106 bis 850 $\mu$m) in einem 60 x 85 mm großen Teebeutel eingewogen, der anschließend verschweißt wurde. Der Teebeutel wurde für 30 Minuten in einen Überschuss einer 0,9 gew.-%igen Kochsalzlösung gegeben (mindestens 0,83 l Lösung/1 g Polymerpulver). Anschließend wurde der Teebeutel 3 Minuten lang bei 250 G zentrifugiert. Die Bestimmung der vom wasserabsorbierenden Polymer festgehaltenen Flüssigkeitsmenge geschieht durch Auswägen des zentrifugierten Teebeutels.

Absorption unter Druck (AUL Absorbency Under Load) 0,7 psi (4830 Pa)

Die Bestimmung der Absorption unter Druck wurde analog zur von der EDANA (European Disposables and Nonwovens Association) empfohlenen Testmethode Nr. 442.2-02 " Absorption under pressure " durchgeführt.

Die Messzelle zur Bestimmung der AUL 0,7 psi ist ein Plexiglas-Zylinder mit einem Innendurchmesser von 60 mm und einer Höhe von 50 mm, der an der Unterseite einen angeklebten Edelstahl-Siebboden mit einer Maschenweite von 36 $\mu$m besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und das Gewicht betragen zusammen 1344 g. Zur Durchführung der Bestimmung der AUL 0,7 psi wird das Gewicht des leeren Plexiglas-Zylinders und der Plastikplatte ermittelt und als W0 notiert. Dann werden-0,900 ± 0,005 g quellbares hydrogelbildendes Polymer (Korngrößenverteilung 150 - 850 μm) in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit gewogen; das Gewicht wird als Wa notiert. Nun wird das Gewicht auf die Plastikplatte in dem Plexiglas-Zylinder gestellt. In die Mitte der Petrischale mit einem Durchmesser von 200 mm und einer Höhe von 30 mm wird eine keramische Filterplatte mit einem Durchmesser von 120 mm, einer Höhe von 10 mm und einer Porosität 0 gelegt und soviel 0,9 gew.-%ige Natriumchloridlösung eingefüllt, dass die Flüssigkeitsoberfläche-mit der Filterplattenoberfläche abschließt, ohne dass die Oberfläche der Filterplatte benetzt wird. Anschließend wird ein rundes Filterpapier mit einem Durchmesser von 90 mm und einer Porengröße < 20 μm (S&S 589 Schwarzband von Schleicher & Schüll) auf die keramische Platte gelegt. Der quellbares hydrogelbildendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als Wb notiert.

Die Absorption unter Druck (AUL) wird wie folgt berechnet:

$$\text{AUL 0,7 psi } [g/g] = [Wb\text{-}Wa]/[Wa\text{-}W0]$$

Absorption unter Druck (AUL Absorbency Under Load) 0,3 psi (2070 Pa)

Die Messung wird analog der AUL 0.3 psi durchgeführt. Das Gewicht der Plastikplatte und das Gewicht betragen zusammen 576 g.

Warmlagerstabilität

Von dem bei dem Bestimmung der Zentrifugenretentionskapazität erhaltenen Hydrogel wurden 10 g in eine 50 ml Glasflasche eingefüllt. Die Glasflasche wurde verschlossen und bei 90°C in einem Umlufttrockenschrank gelagert. Gemessen wurde die Zeit bis zum Zerfließen des Hydrogels.

Beispiele

Beispiel 1

In einen Lödige-Pflugscharkneter Typ VT 5R-MK (5 l Volumen) wurden 1000 g entionisiertes Wasser und 810 g Acrylsäure vorgelegt und unter Durchperlen von Stickstoff 20 Minuten inertisiert. Anschließend wurde mit 263 g einer 48 gew.-%igen, ebenfalls inertisierten, Kaliumhydroxidlösung neutralisiert. Anschließend wurden 0,65 g Pentaerithrittriallylether und 10 g Sorbitanmonolaurat zugesetzt. Dann wurde durch Zusatz (verdünnte wässrige Lösungen) von 2,7 g Natriumpersulfat gelöst in 15,3 g Wasser und 0,024 g Ascorbinsäure gelöst in 4,8 g Wasser bei ca. 23 °C die Polymerisation gestartet. Nach dem Erreichen der Maximaltemperatur wurde noch 15 Minuten nachgerührt. Anschließend wurde das erhaltene Hydrogel mit 527 g einer 48 gew.-%igen Kaliumhydroxidlösung nachneutralisiert. Das letztlich erhaltene krümelige Gel wurde dann bei 160°C ca. 3 Stunden im Umlufttrockenschrank getrocknet.

Das getrocknete Grundpolymer wurde gemahlen und auf 106 bis 850 μm abgesiebt.

100 g des getrockneten Grundpolymers wurden in einem Waring-Labormischer vorgelegt, der mit einem Aufsatz mit stumpfen Mischklingen ausgerüstet war. Bei mittlerer Drehzahl wurden dann mittels einer Injektionsspritze langsam durch ein Loch im Deckel des Mischaufsatzes langsam 0,07 g Ethylenglykoldiglycidylether gelöst in 2 g 1,2-Propandiol und 1 g Wasser unter Rühren zugefügt, um das Grundpolymer möglichst gleichmäßig zu benetzen.

Das befeuchtete Polymer wurde durch Rühren homogenisiert und dann auf einem Uhrglas im Umlufttrockenschrank für 60 Minuten bei 150°C getempert. Schließlich wurde durch ein 850 μm Sieb gesiebt, um Klumpen zu entfernen.

Die Warmlagerstabilität des wasserabsorbierenden Polymeren im gequollenen Zustand betrug 40 Stunden. Die Zentrifugenretentionskapazität betrug 25 g/g und die Absorption unter einem Druck von 4830 Pa betrug 11,5 g/g.

Beispiel 2

Es wurde verfahren wie unter Beispiel 1, wobei 0,27 g Methylenbisacrylamid statt 0,65 g Pentaerithrittriallylether eingesetzt wurden.

Die Warmlagerstabilität des wasserabsorbierenden Polymeren im gequollenen Zustand betrug 20 Stunden. Die Zentrifugenretentionskapazität betrug 21 g/g und die Absorption unter einem Druck von 2070 Pa betrug 18,6 g/g.

**Patentansprüche**

1. Wasserabsorbierendes Polymer, enthaltend

a) mindestens ein einpolymerisiertes ethylenisch ungesättigtes, säuregruppentragendes Monomer, wobei die Säuregruppen zu 51 bis 64 mol-% als Carboxylatgruppen vorliegen und die Carboxylatgruppen zumindest teilweise Kaliumionen als Gegenionen aufweisen,

b) mindestens einen einpolymerisierten Vernetzer,

c) gegebenenfalls ein oder mehrere einpolymerisierte mit den unter a) genannten Monomeren copolymerisierbare einpolymerisierte ethylenisch und/oder allylisch ungesättigte Monomere,

d) gegebenenfalls ein oder mehrere wasserlösliche Polymere, auf die die unter a), b) und ggf. c) genannten Monomere zumindest teilweise aufgepfropft sind, und

e) gegebenenfalls ein oder mehrere umgesetzte Nachvernetzer.

2. Polymer gemäß Anspruch 1, wobei der einpolymerisierte Vernetzer mindestens eine polymerisierbare Gruppe ausgewählt aus Allyl, Acryloxy und Methacryloxy enthielt.

3. Polymer gemäß Anspruch 1 oder 2, wobei der einpolymerisierte Vernetzer mindestens zwei polymerisierbare Allylgruppen enthielt.

4. Verfahren zur Herstellung wasserabsorbierender Polymere durch Polymerisation einer Monomerlösung, enthaltend

   i. mindestens ein ethylenisch ungesättigtes, säuregruppentragendes Monomer,
   ii. mindestens einen Vernetzer,
   iii. gegebenenfalls ein oder mehrere mit i) copolymerisierbare ethylenisch und/oder allylisch ungesättigte Monomere und
   iv. gegebenenfalls ein oder mehrere wasserlösliche Polymere, auf die die Monomere i), ii) und ggf. iii) zumindest teilweise aufgepfropft werden können,

   **dadurch gekennzeichnet, dass** die Säuregruppen des Monomeren i) in der Monomerlösung bis zu 40 mol-% als Carboxylatgruppen vorliegen, das bei der Polymerisation erhaltene Hydrogel nachneutralisiert wird, so dass die Säuregruppen des einpolymerisierten Monomeren i) zu 51 bis 74 mol-% als Carboxylatgruppen vorliegen und die Carboxylatgruppen im nachneutralisierten Hydrogel zumindest teilweise Kaliumionen als Gegenionen aufweisen.

5. Verfahren gemäß Anspruch 4, **dadurch gekennzeichnet, dass** das nachneutralisierte Hydrogel nachvernetzt wird.

6. Verwendung mindestens eines wasserabsorbierenden Polymeren gemäß einem der Ansprüche 1 bis 3 zur Herstellung brandhemmender Zusammensetzungen oder Beschichtungen.

7. Verwendung mindestens eines nachvernetzten wasserabsorbierenden Polymeren zur Herstellung brandhemmender Zusammensetzungen oder Beschichtungen.

8. Verwendung gemäß Anspruch 7, **dadurch gekennzeichnet, dass** der in das Grundpolymer einpolymerisierte Vernetzer mindestens eine polymerisierbare Gruppe ausgewählt aus Allyl, Acryloxy und Methacryloxy enthielt.

9. Herstellung brandhemmender Zusammensetzungen, **dadurch gekennzeichnet, dass** man mindestens ein Polymer gemäß einem der Ansprüche 6 bis 8 mit Wasser mischt.

10. Herstellung brandhemmender Zusammensetzungen gemäß Anspruch 9, **dadurch gekennzeichnet, dass** das Gewichtsverhältnis Wasser zu Polymer mindestens 50:1 beträgt.

11. Brandhemmende Zusammensetzung, enthaltend mindestens ein Polymer gemäß einem der Ansprüche 6 bis 8 und Wasser.

12. Zusammensetzung gemäß Anspruch 11, wobei das Gewichtsverhältnis Wasser zu Polymer mindestens 50:1 beträgt.

13. Zusammensetzung gemäß Anspruch 11 oder 12, enthaltend mindestens einen Zusatzstoff aus der Gruppe Farbstoffe und Deckhilfsmittel.

14. Kleidungsstück, beschichtet mit mindestens einer brandhemmenden Zusammensetzung, enthaltend mindestens ein Polymer gemäß einem der Ansprüche 6 bis 8.

15. Gebäudeteile, beschichtet mit mindestens einer brandhemmenden Zusammensetzung, enthaltend mindestens ein Polymer gemäß einem der Ansprüche 6 bis 8.

16. Verwendung mindestens eines wasserabsorbierenden Polymeren gemäß Anspruch 1 bis 3 als wasserrückhaltendes Mittel in der Landwirtschaft.

17. Verwendung gemäß Anspruch 16, **dadurch gekennzeichnet, dass** die Partikelgröße des wasserabsorbierenden Polymeren von 106 bis 850 $\mu$m beiträgt.

18. Verwendung gemäß Anspruch 16, **dadurch ge-**

**kennzeichnet, dass** die Partikelgröße des wasserabsorbierenden Polymeren von 1 bis 4 mm beträgt.

**Claims**

1.  A water-absorbing polymer, comprising

    a) at least one interpolymerized ethylenically unsaturated monomer bearing acid groups, wherein from 51 to 64 mol% of the acid groups are present as carboxylate groups and some or all of the carboxylate groups have potassium ions as counterions,
    b) at least one interpolymerized crosslinker,
    c) optionally one or more interpolymerized ethylenically and/or allylically unsaturated monomers copolymerizable with a),
    d) optionally one or more water-soluble polymers onto which the monomers a), b) and if appropriate c) are at least partly grafted, and
    e) optionally one or more reacted postcrosslinkers.

2.  The polymer according to claim 1 wherein the interpolymerized crosslinker comprises one or more polymerizable groups selected from allyl, acryloyloxy and methacryloyloxy.

3.  The polymer according to claim 1 or 2 wherein the interpolymerized crosslinker comprises two or more polymerizable allyl groups.

4.  A process for producing water-absorbing polymers by polymerization of a monomer solution comprising

    i. at least one ethylenically unsaturated monomer bearing acid groups,
    ii. at least one crosslinker,
    iii. optionally one or more ethylenically and/or allylically unsaturated monomers copolymerizable with i), and
    iv. optionally one or more water-soluble polymers onto which the monomers i), ii) and if appropriate iii) can be at least partly grafted,

    wherein up to 40 mol% of the acid groups of the monomer i) are present in the monomer solution as carboxylate groups, the as-polymerized hydrogel is postneutralized so that from 51 to 74 mol% of the acid groups of the interpolymerized monomer i) are present as carboxylate groups and some or all of the carboxylate groups in the postneutralized hydrogel have potassium ions as counterions.

5.  The process according to claim 4 wherein the postneutralized hydrogel is postcrosslinked.

6.  The use of at least one water-absorbing polymer according to any one of claims 1 to 3 for producing fire-retarding compositions or coatings.

7.  The use of at least one postcrosslinked water-absorbing polymer for producing fire-retarding compositions or coatings.

8.  The use according to claim 7 wherein the crosslinker interpolymerized into the base polymer comprises one or more polymerizable groups selected from allyl, acryloyloxy and methacryloyloxy.

9.  The production of fire-retarding compositions which comprises mixing at least one polymer according to any one of claims 6 to 8 with water.

10. The production of fire-retarding compositions according to claim 9 wherein the weight ratio of water to polymer is not less than 50:1.

11. A fire-retarding composition comprising at least one polymer according to any one of claims 6 to 8 and water.

12. The composition according to claim 11 wherein the weight ratio of water to polymer is not less than 50:1.

13. The composition according to claim 11 or 12 that comprises at least one additive selected from the group consisting of dyes and opacifying assistants.

14. A garment coated with at least one fire-retarding composition comprising at least one polymer according to any one of claims 6 to 8.

15. A component which is part of a built structure and coated with at least one fire-retarding composition comprising at least one polymer according to any one of claims 6 to 8.

16. The use of at least one water-absorbing polymer according to claim 1 to 3 as a water-retaining agent in agriculture.

17. The use according to claim 16 wherein the particle size of the water-absorbing polymer is in the range from 106 to 850 μm.

18. The use according to claim 16 wherein the particle size of the water-absorbing polymer is in the range from 1 to 4 mm.

**Revendications**

1.  Polymère absorbant l'eau, contenant

a) au moins un monomère copolymérisé, éthyléniquement insaturé, portant des groupes acides, où les groupes acides se trouvent à raison de 51 à 64% en mole sous forme de groupes carboxylate et les groupes carboxylate présentent au moins partiellement des ions de potassium comme contre-ions,

b) au moins un agent de réticulation copolymérisé,

c) éventuellement un ou plusieurs monomères éthyléniquement insaturés et/ou allyliquement insaturés, copolymérisables avec les monomères cités en a), copolymérisés et

d) éventuellement un ou plusieurs polymères solubles dans l'eau sur lesquels les monomères mentionnés en a), b) et éventuellement c) sont au moins partiellement greffés, et

e) éventuellement un ou plusieurs agents de post-réticulation transformés.

2. Polymère selon la revendication 1, où l'agent de réticulation copolymérisé contenait au moins un groupe polymérisable choisi parmi les groupes allyle, acryloxy et méthacryloxy.

3. Polymère selon la revendication 1 ou 2, où l'agent de réticulation copolymérisé contenait au moins deux groupes allyle polymérisés.

4. Procédé pour la préparation de polymères absorbant l'eau par polymérisation d'une solution de monomères, contenant

   i. au moins un monomère monoéthyléniquement insaturé, portant des groupes acides,

   ii. au moins un agent de réticulation,

   iii. éventuellement un ou plusieurs monomères éthyléniquement insaturés et/ou allyliquement insaturés copolymérisables avec i) et

   iv. éventuellement un ou plusieurs polymères solubles dans l'eau sur lesquels les monomères i), ii) et éventuellement iii) peuvent être au moins partiellement greffés,

   **caractérisé en ce que** les groupes acides du monomère i) se trouvent dans la solution de monomères à raison de jusqu'à 40% en mole sous forme de groupes carboxylate, l'hydrogel obtenu lors de la polymérisation est post-neutralisé de manière telle que les groupes acides du monomère copolymérisé i) se trouvent à raison de 51 à 74% en mole sous forme de groupes carboxylate et les groupes carboxylate présentent dans l'hydrogel post-neutralisé au moins partiellement des ions de potassium comme contre-ions.

5. Procédé selon la revendication 4, **caractérisé en ce que** l'hydrogel post-neutralisé est post-réticulé.

6. Utilisation d'au moins un polymère absorbant l'eau selon l'une quelconque des revendications 1 à 3 pour la préparation de compositions ou de revêtements retardant les flammes.

7. Utilisation d'au moins un polymère post-réticulé absorbant l'eau pour la préparation de compositions ou de revêtements retardant les flammes.

8. Utilisation selon la revendication 7, **caractérisée en ce que** l'agent de réticulation copolymérisé dans le polymère de base contenait au moins un groupe polymérisable choisi parmi les groupes allyle, acryloxy et méthacryloxy.

9. Préparation de compositions retardant les flammes, **caractérisée en ce qu'**on mélange au moins un polymère selon l'une quelconque des revendications 6 à 8 avec de l'eau.

10. Préparation de compositions retardant les flammes selon la revendication 9, **caractérisée en ce que** le rapport pondéral eau à polymère est d'au moins 50: 1.

11. Composition retardant les flammes, contenant au moins un polymère selon l'une quelconque des revendications 6 à 8 et de l'eau.

12. Composition selon la revendication 11, le rapport pondéral eau à polymère étant d'au moins 50:1.

13. Composition selon la revendication 11 ou 12, contenant au moins un additif du groupe des colorants et des adjuvants de recouvrement.

14. Vêtement, revêtu par au moins une composition retardant les flammes, contenant au moins un polymère selon l'une quelconque des revendications 6 à 8.

15. Pièces de bâtiment, revêtues par au moins une composition retardant les flammes, contenant au moins un polymère selon l'une quelconque des revendications 6 à 8.

16. Utilisation d'au moins un polymère absorbant l'eau selon les revendications 1 à 3 comme agent de rétention de l'eau en agriculture.

17. Utilisation selon la revendication 16, **caractérisée en ce que** la grosseur des particules du polymère absorbant l'eau est de 106 à 850 μm.

18. Utilisation selon la revendication 16, **caractérisée en ce que** la grosseur des particules du polymère absorbant l'eau est de 1 à 4 mm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 649669 A
- US 3229769 A
- US 5849210 A
- US 5041496 A
- EP 530438 A
- EP 547847 A
- EP 559476 A
- EP 632068 A
- WO 9321237 A
- WO 03104299 A
- WO 03104300 A
- WO 03104301 A
- WO 10331450 A
- DE 10331456
- DE 10355401
- DE 19543368 A
- DE 19646484 A
- WO 9015830 A
- WO 0232962 A
- DE 19941423 A
- EP 686650 A

- WO 0145758 A
- WO 0138402 A
- EP 955086 A
- EP 083022 A
- EP 543303 A
- EP 937736 A
- DE 3314019 C
- DE 3523617 C
- EP 450922 A
- DE 10204938 A
- US 6239230 B
- DE 4020780 A
- DE 19807502 A
- DE 19807992 A
- DE 19854573 A
- DE 19854574 A
- DE 10204937 A
- DE 10334584
- EP 1199327 A
- WO 03031482 A

**In der Beschreibung aufgeführte Nicht-Patentliteratur**

- **F.L. Buchholz ; A.T. Graham.** Modern Superabsorbent Polymer Technology. Wiley-VCH, 1998

- Ullmann's Encyclopedia of Industrial Chemistry. vol. 5, 73-103